# EUROPEAN PATENT SPECIFICATION

(11) **EP 0 548 063 B1**
(45) Date of publication and mention of the grant of the patent: **18.06.1997**
(21) Application number: 93250068.9
(22) Date of filing: 21.02.1989
(51) Int. Cl.: D06F 37/02, D06F 25/00, D06F 95/00, D06F 39/08

(54) **Drum type washing apparatus**
Trommelwaschmaschine
Machine à laver à tambour

(30) Priority: 23.02.1988 JP 40513/88; 28.07.1988 JP 188661/88; 13.09.1988 JP 227418/88; 26.10.1988 JP 139766/88; 15.03.1988 JP 61281/88; 06.12.1988 JP 306942/88; 25.01.1989 JP 15580/89
(43) Date of publication of application: 23.06.1993
(62) Divisional of application: 89730040.6
(73) Proprietor: MITSUBISHI JUKOGYO KABUSHIKI KAISHA, Tokyo (JP); Churyo Engineering Kabushiki Kaisha, Nagoya-shi Aichi-ken (JP)
(72) Inventor: Ueda, Atsushi, c/o Nagoya Mach. Works, Nakamura-ku, Nagoya, Aichi Pref. (JP); Yamada, Shuji, c/o Churyo Engineering K.K., Nakamura-ku, Nagoya-shi, Aichi ken (JP); Yagami, Kenichi, c/o Nagoya Mach. Works, Nakamura-ku, Nagoya, Aichi Pref. (JP); Tsubaki, Yasuhiro, c/o Nagoya Techn. Institute, Nakamura-ku, Nagoya, Aichi Pref. (JP); Ishihara, Hidetoshi, c/o Nagoya Mach. Works, Nakamura-ku, Nagoya, Aichi Pref. (JP); Kitajima, Kazuo, c/o Nagoya Techn. Institute, Nakamura-ku, Nagoya, Aichi Pref. (JP); Hayashi, Shoichi, c/o Nagoya Mach. Works, Nakamura-ku, Nagoya, Aichi Pref. (JP)
(74) Representative: Meissner, Peter E., Dipl.-Ing.

(56) References cited:
- DE-A- 2 513 660
- GB-A- 858 182
- US-A- 3 358 301

## Description

### FIELD OF THE INVENTION AND RELATED ART STATEMENT

The present invention relates to a drum type washing apparatus usable on the domestic basis as well as on the industrial basis to process the wash wherein at least one step among steps of washing, dewatering and drying inclusive a step of dry cleaning can be performed in a single unit to process the wash, e.g., various kinds of underwears in individual home or linens, bed sheets or the like in hotel, hospital or the like facilities.

Hitherto, the laundry industry has offered such laundry services as comprising the receiving of soiled cloths such as towels, sheets, bandages, uniforms or the like (hereinafter generally referred to as linens) from hotel, hospital or the the ike facilities, processing of them for the purpose of reuse and the delivering of cleaned linens to hotel, hospital or the like facilities. Steps of processing are usually divided into (1) washing, (2) dewatering, (3) drying and (4) finishing. In a case where linens such as towels or the like should be completely dried, steps (1) to (3) are required. On the other hand, in a case where linens such as sheets, bandages, uniforms or the like should be finished by ironing, steps (1) to (4) are required (It should be noted that a step (3) of drying is performed within a short period of time).

With a conventional apparatus, in general, linens are first washed and dewatered and after completion of steps of washing and dewatering the linens are conveyed to a drier in which a step of drying is performed.

The conventional apparatus in which steps of washing and dewatering are continuously performed includes a rotary drum of which wall is made of a perforated plate, and a plurality of beaters are attached to the wall of the rotary drum so that the linens are lifted up from the inner wall surface of the rotary drum as the latter is rotated. With this construction, the linen are usually washed in the presence of detergent under the influence of shock appearing over the water surface when they fall down. On completion of the step of washing, the rotary drum in turn is rotated at a higher rotational speed so that water involved in the linens is dewatered therefrom under the effect of centrifugal force generated by rotation of the rotary drum at such a high rotational speed. On completion of the step of dewatering, a laundryman stops operation of the apparatus and displaces the linens in a wagon or the like to carry them to a drier in which a next step of drying is performed. To dry the linens, a rotary drum type drier is usually employed which includes a rotary drum in which the washed and dewatered linens are dried by blowing hot air into the interior of the rotary drum. A period of time required for performing a step of drying in the rotary drum differs in dependence on the kinds of linens which are typically divided into two kinds, one of them being linens such as towels or the like which require complete drying and the other one being half-dried linens such as sheets, bandages, uniforms and so forth which are conveyed to a next shop where they are finished by ironing. Thus, a drying time is properly selected in dependence on the kinds of linens to be dried.

The above description has been generally referred to the prior art which requires that steps of washing and dewatering and a step of drying are performed using two independent units. As a special case, a so-called washing/dewatering/drying unit is already commercially sold in which steps of washing, dewatering and drying are successively performed using a single unit.

Since this type of unit is so constructed that steps of washing, dewatering and drying are performed without discontinuance, it is unnecessary that a laundryman carries linens in the course of washing operation as is the case with the separate type unit. In fact, however, the unit has the following restrictions from the viewpoint of structure, resulting in the unit failing to be widely put in practical use.
(1) When steps of washing, dewatering and drying are continuously performed in the conventional unit, a period of time required for executing these steps one after another is prolonged substantially longer than a total value of time comprising a time required by the conventional washing/dewatering unit and a time required by the drier, resulting in productibity being reduced. This is attributable to the fact that a perforation rate of the rotary drum is restricted within the range of 20 to 30 % from the viewpoint of mechanical strength of the rotary drum which should be rotated at a higher rotational speed to perform a step of continuous dewatering. Since an ordinal drier has a perforation rate of about 60 %, it is obvious that the conventional washing/dewatering apparatus has a reduced air venting efficiency compared with the drier and this leads to a result that a drying time is prolonged.
(2) After completion of the steps of washing and dewatering, it is often found that some kind of linens, e.g., towels, sheets or the like are brought in tight contact with the inner wall surface of the rotary drum. This makes it difficult to remove the linens away from the inner wall surface of the rotary drum during a period of drying, resulting in uniform drying being achieved only with much difficulties. Sometimes, there arises a necessity for interrupting operation of the unit to manually remove the linens from the inner wall surface of the rotary drum.
(3) Generally, an operation for removing the linens from the rotary drum after completion of a step of washing is a severe task which requires a high intensity of force to be given by a young laundryman. Accordingly, a request for facilitating removal operation has been raised from the laundry industry.

Now, description will be made in more details below as to structure of the rotary drum which has been used for the conventional washing/dewatering/drying unit.

A rotary drum type dewatering unit adapted to perform a step of dewatering under the effect of centrifugal force is identical to each of a washer usable in individual home, a laundry washer, a dry cleaner in which an organic solvent is used as a washing medium and a centrifugal type dewatering unit usable on the industrial base as far as a fundamental structure associated with dewatering operation is concerned. Therefore, description will be typically made with reference to a washer usable in individual home.

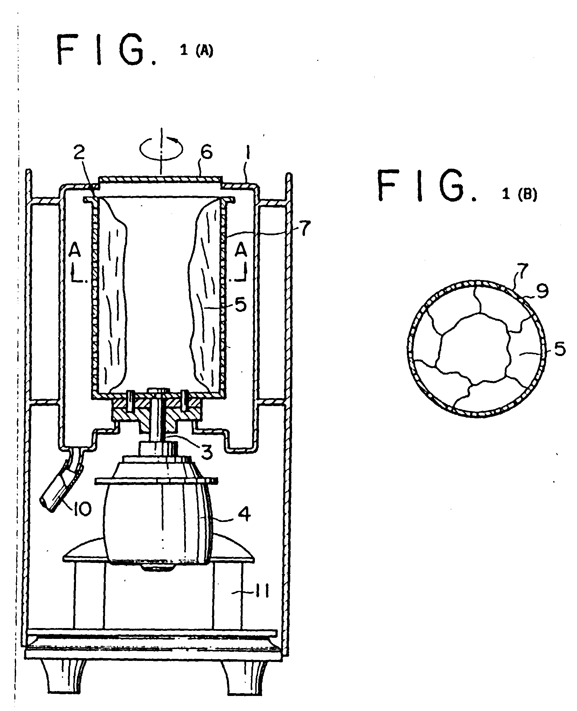

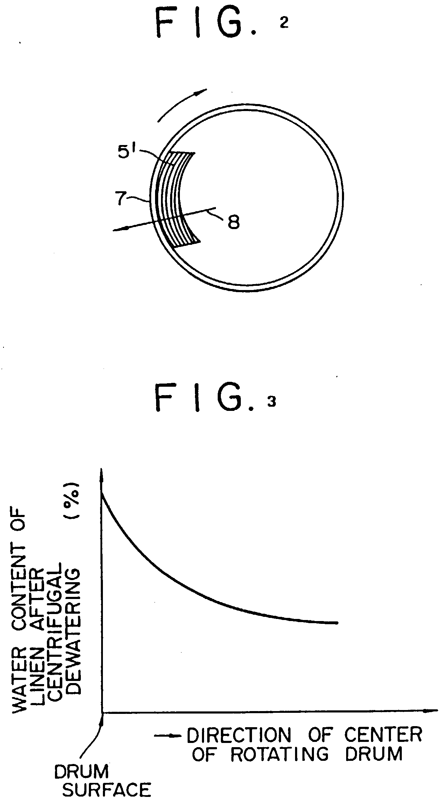

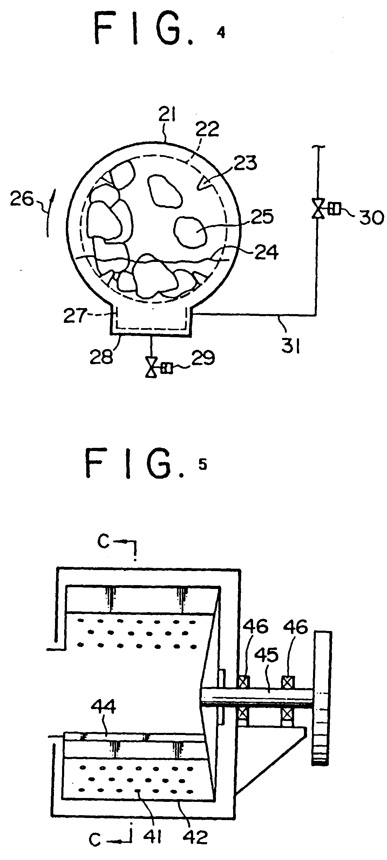

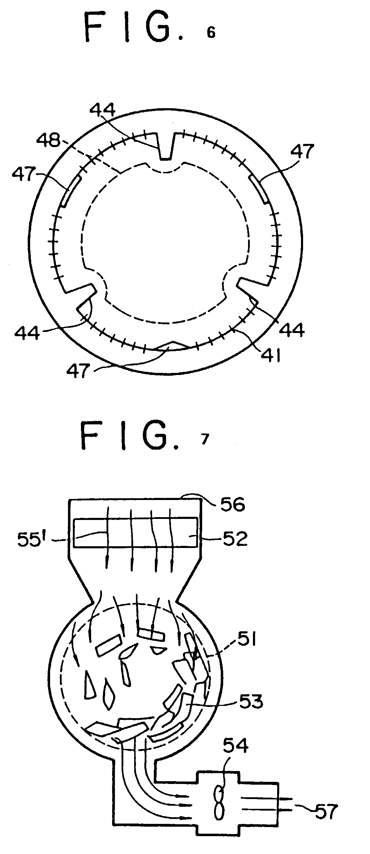

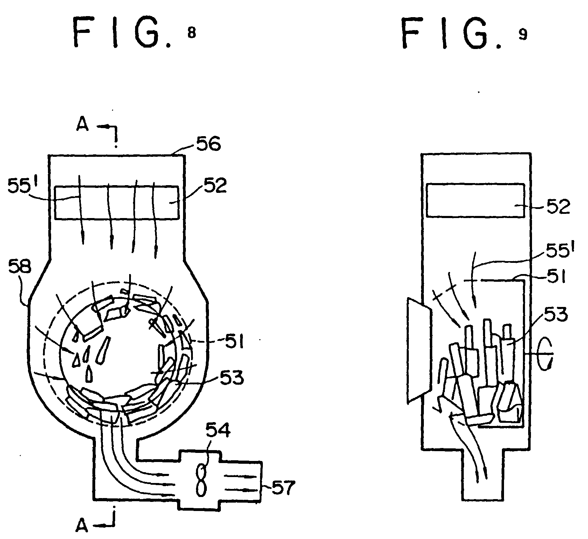

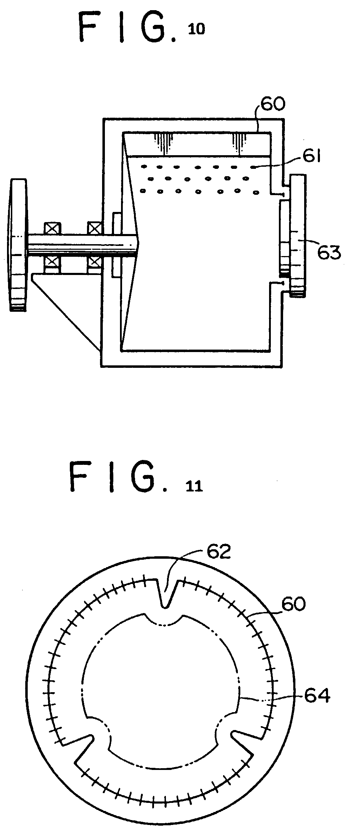

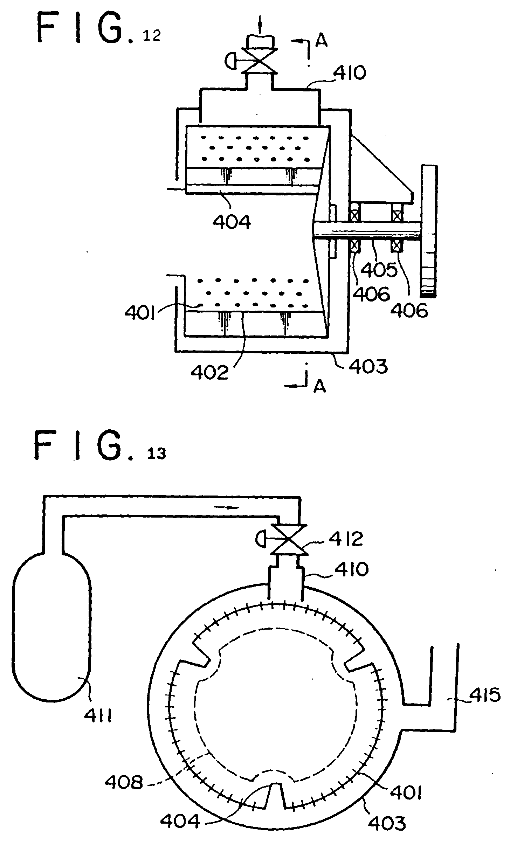

As shown in Figs. 1(A) and 1(B), a dewatering barrel 1 is composed of a rotary drum 2 of which cylindrical wall is made of a perforated plate having a perforation rate in the range of 10 to 20 %, a rotational shaft 3 adapted to support the rotary drum 2 to rotate the latter and a motor 4 for rotating the rotational shaft 3. Reference numeral 9 designates a number of holes which are drilled through the cylindrical wall 7, reference numeral 10 does a water discharge pipe attached to the bottom of the dewatering barrel 1 and reference numeral 11 does a plurality of vibration proof rubbers interposed between the motor 4 and the base platform of the washer.

After completion of a step of washing, linens 5 are introduced into the dewatering barrel 1 from a washing barrel (not shown), the dewatering barrel 1 is closed with a lid 6 and a desired period of time is then set using a timer switch (not shown). Then, the rotary drum 2 is rotated at a higher speed by the motor 2 so that water in the linens 5 is discharged through the cylindrical wall 7 made of a perforated plate of which center axis coincides with that of the rotary drum 2.

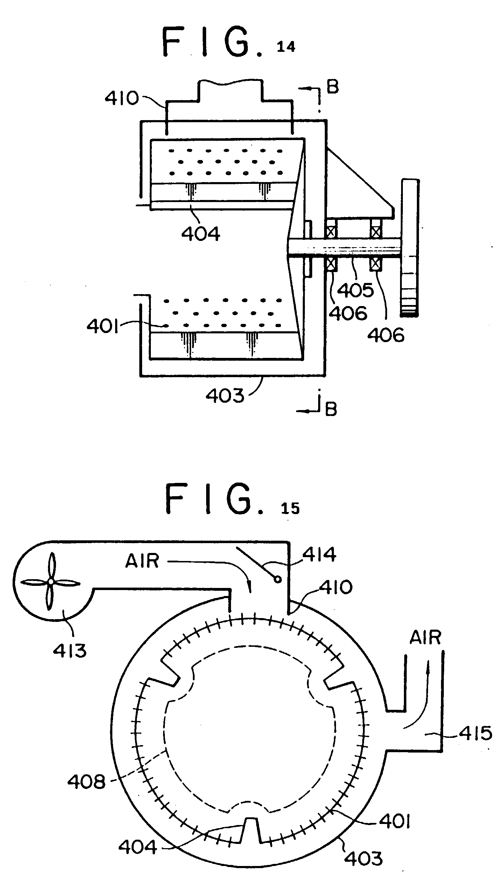

The inventors examined the prior art as mentioned above by measuring a water content of each of the linens 5' at the time when a step of dewatering is substantially completed, the linens 5' being placed round the inner wall surface of the cylindrical wall 7 in a layered structure while having an uniform thickness as viewed in the peripheral direction, as shown in Fig. 2. Results derived from the measurements reveal that the linens 5' located in the proximity of the inner wall surface of the cylindrical wall 7 has a water content about two times as much as that of the linens 5' located remote from the inner wall surface of the cylindrical wall 7, i.e., the linens 5' located near to the axis of rotation of the cylindrical wall 7, as shown in Fig. 3.

This is because of the fact that the cylindrical wall 7 extends at right angles relative to the direction of centrifugal force as is best seen in Fig. 2 so that water remaining between the linens 5 and the inner wall surface of the cylindrical wall 7 is prevented from moving along the inner wall surface of the cylindrical wall 7, resulting in the water retained therebetween failing to be discharged from the linens 5'. On the other hand, since water involved in the linens 5' located remote from the inner wall surface of the cylindrical wall 7 is caused to smoothly move through capillary tubes in the linens 5' in the direction R of centrifugal force, the result is that the linens 5' located in the proximity of the central part of the rotary drum 2 have a water content less than that of the linens 5' located in the proximity of the inner wall surface of the cylindrical wall 7, as shown in Fig. 3.

Additionally, there is a tendency that the linens 5' located in the proximity of the inner wall surface of the cylindrical wall 7 has a water content which is increased more and more as a thickness of the linens 5' is reduced. It is believed that this is attributable to the fact that the linens 5' (located remote from the inner wall surface of the cylindrical wall 7) to serve for thrusting the linens 5' located in the proximity of the inner wall surface of the cylindrical wall 7 in the direction of centrifugal force has a reduced weight, causing an effect of squeezing the water to be reduced.

As will be readily apparent from the above description, since the conventional dewatering unit is so constructed that the cylindrical wall 7 constituting the rotary drum 2 extends at right angles relative to the direction 8 of centrifugal force, it has significant drawbacks that water involved in the linens 5 located near to the inner wall surface of the cylindrical wall 7 can not be satisfactorily discharged from the rotary drum 2 and thereby a property of dewatering which can be expected in nature from an intensity of centrifugal force fails to be exhibited to satisfaction. As a result, an extra quantity of energy and time are naturally consumed for the purpose of drying the linens after completion of a step of dewatering.

Next, a step of washing to be performed with the use of a conventional unit will be described below with reference to Fig. 4 which schematically illustrates a drum type washing unit.

Specifically, Fig. 4 is a schematic sectional view illustrating the drum type washing unit which is maintained during a period of washing.

In the drawing, reference numeral 21 designates a washing barrel, reference numeral 22 does a rotary drum, reference numeral 23 does a plurality of beaters for lifting up linens 25 while the rotary drum 22 is rotated in the direction (as identified by an arrow mark 26) and reference numeral 24 does a washing water which has been introduced into the interior of the washing drum 21 via a water supply piping 31.

Reference numeral 27 designates a lint filter for catching waste threads (lints) derived from the linens 25. The lint filter 27 is accommodated in a filter box 28 having a water discharge valve 29 connected thereto.

With this construction, a water level of the washing water 24 is monitored by a water level meter (designed in a float type, a hydraulic pressure type or the like) which is not shown in the drawing, and when a predetermined quantity of water is introduced into the washing barrel 21, a water supply valve 30 is closed automatically.

The rotary drum 22 is rotated when water supply is started. It continues to be rotated for a period of time set by a timer circuit and associated components (not shown) even after the washing water 24 reaches a predetermined value of water level so that so-called beat washing is performed for the linens 25 by allowing the latter to be lifted up by the beaters 23 and then caused to fall down. After completion of the step of washing, the water discharge valve 29 is opened whereby waste washing water 24 is discharged from the rotary drum 22 to the outside while flowing through the filter 27.

As described above, according to the conventional method of washing the linens 25 using a rotary drum, the linens 25 are washed by repeatedly lifting up them by the beaters 23 and then causing them to fall down by their own dead weight. This allows an upper limit of the number of revolutions of the rotary drum 22 to be defined in the range of 0.7 to 0.8 G which is represented in terms of a gravity acceleration. If the rotary drum 22 is rotated at a higher speed as represented by more than 1 G, the linens 25 are brought in tight contact with the inner wall surface of the rotary drum 22 with the result that the linens 25 can not fall down, causing an effect of washing operation to be reduced remarkably.

It is obvious from the viewpoint of an effect of washing operation that the number of drops of the linens 25 can be increased more and more by increasing the number of revolutions of the rotary drum as far as possible with the result that an effect of agitation can be increased remarkably accompanied by an improved property of washing or a reduced time required for performing a step of washing. However, the number of revolutions of the rotary drum can not be set to a high level in excess of 1 G for the foregoing reasons and this offers a significant obstruction appearing when a washing time is to be shortened.

Next, a conventional step of dewatering will be described below with reference to Figs. 5 and 6 which schematically illustrate structure of a rotary drum.

As shown in Fig. 5, the washing/dewatering unit includes a rotary drum 42 of which cylindrical wall is formed with a number of communication holes 41, and a plurality of beaters 44 (three beaters in the illustrated case) are attached to the inner wall surface of the rotary drum while projecting in the inward direction. In the drawing, reference numeral 45 designates a main shaft for supporting the rotary drum and reference numeral 46 does bearings for rotatably supporting an assembly of the rotary drum 42 and the main shaft 45.

With such washing/dewatering unit, linens to be washed are introduced into the interior of the rotary drum 42 to be washed and after completion of the step of washing, rinsing operations are performed by several times so that the process goes to a step of dewatering to be performed by rotating the rotary drum 42 at a higher rotational speed. It should be noted that during a period of dewatering there may arise a difficult problem that the linens can not be removed from the rotary drum 42 because the latter are brought in tight contact with the inner wall surface of the rotary drum 42 due to penetration of a part of the linens into the communication holes 41 during rotation of the rotary drum at a high rotational speed.

To obviate the foregoing problem, there have been already raised a variety of proposals for preventing the linens from coming in tight contact with the inner wall surface of the rotary drum 42. One of the proposals is such that a plurality of tight contact prevention plates 47 having an adequate configure and dimensions are secured to a part of the inner wall surface of the rotary drum located between the adjacent beaters 44. As is best seen in Fig. 6, the tight contact prevention plates 47 may be designed either in the form of a flat plate as seen on the side walls or in the form of a hill-shaped member as seen on the bottom side of the rotary drum 42.

According to this proposal, since each of the tight contact prevention plates 47 is secured to a part of the inner wall surface of the rotary drum 42 between the adjacent beaters 44, no penetration of a part of the linens 48 into the communication holes 41 takes place during a period of dewatering because the communication holes 41 located at a part between the adjacent beaters 44 and a part of the inner wall surface of the rotary drum 42 occupied by the tight contact prevention plate 47 are covered with the beaters 41 and the tight contact prevention plate 47. Thus, washing water in the linens 48 is discharged from the rotary drum 42 only through other communication holes 41. This makes it possible to easily remove the linens 48 from the interior of the rotary drum 42 while slowly turning the latter because no penetration of a part of the linens 48 into the communication holes 41 takes place at a part between the adjacent beaters 44 and a part of the inner wall surface of the rotary drum 42 occupied by the tight contact prevention plate 47 as mentioned above, although some part of the linens 48 is penetrated into the communication holes 41 at an area where that latter are not closed with the beaters 44 and the tight contact prevention plates 47.

After completion of the step of washing, the process goes to a next step of dewatering during which washing water involved in the linens 48 is separated therefrom by rotating the rotary drum 42 at such a higher rotational speed that causes a high intensity of centrifugal force (represented, e.g., by 300 G) to be generated. This permits a part of the linens 48 to be penetrated into the communication holes 41 under the effect of the centrifugal force generated in that way whereby the linens are brought in tight contact with inner wall surface of the rotary drum 42.

To prevent the linens from coming in tight contact with the inner wall surface of the rotary drum 42, there was made the above-mentioned proposal that some part of the communication holes 41 are closed with a plurality of tight contact prevention plates 47 so that the linens 48 can be easily removed from the inner wall surface of the rotary drum 42. In spite of the fact that a principal object of the step of dewatering is to discharge washing water through the communication holes 41, however, the above proposal is achieved by closing a part of the communication holes 41 with a dewatering rate being reduced to some extent, in order to prevent the linens 49 from being brought in tight contact with the inner wall surface of the rotary drum. Accordingly, a large quantity of energy is required in correspondence to a degree of reduction of the dewatering rate for performing a subsequent step of drying.

Next, a conventional step of drying will be described below with reference to Figs. 7 to 9.

Figs. 7 to 9 are a schematic view of a conventional drier or washing/dewatering/drying unit, respectively, particularly illustrating the flowing of a hot air in the surrounding area of a rotary drum.

First, description will be made with reference to Fig. 7 as to a step of drying.

In the drawing, reference numeral 51 designates a rotary drum, reference numeral 52 does an air heater comprising a steam jacket or the like, reference numeral 53 does linens and reference numeral 54 does a suction type blower adapted to suck a hot air 55' and then discharge it from the drying system to the outside.

According to the illustrated arrangement, the hot air 55' which has moved through the air heater 52 via an air intake port 56 disposed above the rotary drum 51 is sucked, it is then introduced into the interior of the rotary drum 51 through the holes on the wall of the rotary drum 51 while flowing round the outer wall surface of the latter until it comes in contact with the linens 53 and thereafter it is discharged to the outside via a suction type blower 54 and an exhaust port 57 situated below the rotary drum 51. A characterizing feature of this arrangement consists in that hot air flows in the form of a so-called laminar flow having a number of streaming lines aligned with each other, which is inherent to the suction type air flowing.

Next, description will be made further with reference to Fig. 8 as to the step of drying. The unit shown in Fig. 8 is substantially similar to that in Fig. 7 in structure. As is apparent from Fig. 9 which is a sectional side view of the unit, the latter includes a hot air distributing box 58 located above the rotary drum 51 so that the hot air 55' is positively introduced into the rotary drum 51 from the front part of the upper half of the latter to flow uniformly within the interior of the rotary drum 51. This arrangement exhibits an effect of laminar flow more clearly than in the case as shown in Fig. 7.

As will be readily apparent from the above description, a main feature of the conventional suction type arrangement consists in employment of the suction blower 54 which assures that the hot air 55' is introduced into the rotary drum 51 in the form of a laminar flow and thereby the linens 53 which have been lifted up in the rotary drum 51 as the the latter is rotated are dried in a floated state.

In this manner, the conventional unit employs the suction type arrangement to bring hot air into the rotary drum so that the hot air flows in the form of a so-called laminar flow. Usually, an average flowing speed of the hot air is determined in the range of 1 to 5 m/sec. In an extreme case, it has the maximum flowing speed less than 5 m/sec.

With this construction, to assure that linens are effectively brought in contact with hot air within the interior of the rotary drum, it is necessary that the number of revolutions of the rotary drum is determined in the range of 0.7 to 0.8 G in terms of a gravity acceleration and the linens are floated in the atmosphere including hot air in the form of a laminar flow. If the rotary drum is rotated at a higher rotational speed as represented by more or less 1 G or in excess of 1 G, the result is that the linens are brought in tight contact with the inner wall surface of the rotary drum, causing them to be dried only with much difficulties. In other words, an opportunity for allowing a mass of linens located at the lower part of the rotary drum to be floated in hot air as the rotary drum is rotated is obtainable with the highest possibility when the rotary drum is rotated at a rotation speed which remains in the range of 0.7 to 0.8 G. Thus, if the rotary drum is rotated at a lower speed, the result is that the above opportunity is obtainable with a reduced possibility.

Further, since an average flowing speed of the hot air is maintained at a low level of 1/2 m/sec, a relative speed of the hot air to the linens can not be set to a high level. Strictly speaking, discharging of water vapor produced from the linens is achieved with a delay corresponding to reduction of the relative speed of hot air to the linens.

For the foregoing reasons, an average drying time is usually set in the range of 30 to 40 minutes in accordance with the conventional suction type drying manner. Accordingly, a request for a drier which assures that a drying time can be shortened substantially compared with the conventional drying manner has been raised from the laundry industry.

On the other hand, the conventional drying manner is performed such that linens which have been washed and dewatered are introduced into the rotary drum and the latter is then rotated at a rotational speed under a condition of the centrifugal acceleration as represented by less than 1 G in terms of a gravity acceleration appearing round the inner wall surface of the rotary drum. Thereafter, the linens are lifted up away from the inner wall surface of the rotary drum by activating the beaters attached to the inner wall surface of the rotary drum and they are then caused to fall down by their own dead weight so that they are dried by blowing hot air into the interior of the rotary drum.

To this end, the rotary drum requires a sufficient volume of space in which linens can move freely while they remain within the interior of the rotary drum. Generally, a space about two times as wide as the space set for performing the preceding step of dewatering is required for performing a step of drying. Accordingly, a conventional fully automatic washing/dewatering/drying unit including a single rotary drum in which steps of washing, dewatering and drying are successively performed requires a volume of space two times as large as that of the conventional washing/dewatering unit, causing a manufacturing cost required for manufacturing the unit and dimensions determined for the same to be increased substantially.

Here, for the purpose of reference, description will be made below as to a calculation standard (provided by Japan Industrial Machinery Manufacturer Association) for a standard quantity of load to be carried by a washing/dewatering unit for a laundry shop.$\text{standard quantity of load to be borne Q = f ·} \frac{\text{1}}{\text{4}} {\text{πD}}^{\text{2}} \text{L}$ where f designates a load rate in Kg/m³ wherein f is represented by 45 + 30 D in a case of a washing/dewatering unit and it is represented by 40 in a case of a drier, D does an inner diameter of the rotary drum in meter and L does a inner length of the rotary drum in meter.

The inner length of the rotary drum represents a dimension which is determined such that linens can be introduced into and removed from the rotary drum. Concretely, it is determined in the range of 1.0 to 1.3 m in a case where the rotary drum is charged with a normal quantity of load of 30 Kg. In this case, a drier has a volume of space as represented by a ratio of 1.875 to 2.1 compared with that of the washing/dewatering unit.

If an excessive quantity of load more than the above standard quantity of load is introduced into the rotary drum of the conventional washing/dewatering unit during a step of drying, it has been confirmed that linens are dried with fluctuation in degree of dryness from location to location as viewed round the inner wall surface of the rotary drum due to immovability of the linens within the interior of the rotary drum and moreover the linens require a long drying time in comparison with the quantity of load. Another problem is that if the linens are excessively dried to eliminate the fluctuation in degree of dryness, they tend to have a remarkably reduced period of running life.

Next, description will be made below as to discharging of linens, i.e., removal of the same.

As shown in Figs. 10 and 11, a conventional washing/dewatering unit in which steps of washing and dewatering are successively performed includes a rotary drum 60 of which cylindrical wall is made of a perforated plate 61, and a step of washing is performed in such a manner that linens are repeatedly lifted up by activating a plurality of beaters 62 as the rotary drum is rotated and they are then repeatedly caused to fall down by their own dead weight. When the step of washing is terminated, the rotary drum 60 is rotated at a higher speed so as to allow the linens to be dewatered. On completion of the step of dewatering, an operator stops rotation of the washing/dewatering unit and then opens a door 63 to manually remove from the interior of the rotary drum 60 the linens which have been brought in tight contact with the inner wall surface of the rotary drum under the influence of centrifugal force. Thereafter, he discharges the wet linens from the rotary drum to the outside and then puts them in a wagon or the like means to carry them to a drier.

Thereafter, he opens a door of the drum type drier to introduce the linens into a rotary drum so that they are dried by blowing hot air into the interior of the rotary drum while the latter is rotated.

After he confirms that the linens have been completely dried, he stops operation of the drier, opens the door, manually removes the linens from the interior of the rotary drum and then puts them in a wagon or the like means to carry them to a next step.

As described above, when linens are to be processed in the conventional washing/dewatering unit, they are introduced into the rotary drum and after completion of steps of washing and dewatering, they are manually removed from the interior of the rotary drum. Since the linens are brought in tight contact with the inner wall surface of the rotary drum under the effect of centrifugal force generated by rotation of the linens at a higher speed during a step of dewatering in dependence on the kind of linens, removal of the linens from the interior of the rotary drum after completion of the step of dewatering is a severe task which usually requires a high magnitude of power to be given by a young man.

When the linens are removed from the interior of the rotary drum, it is hardly found that they have been brought in tight contact with the inner wall surface of the rotary drum. However, it is necessary that an operator stoops to extend his hands into the interior of the rotary drum or in some case it is required that he removes the linens therefrom while allowing an upper half of his body to be exposed to the hot atmosphere in the interior of the rotary drum. To eliminate the foregoing inconvenience, a technique for removing linens from the rotary drum after completion of the step of drying was already proposed in Japanese Utility Model Application NO. 19266/1980. This technique is embodied in the form of an apparatus which is so constructed that an inlet port through which wet linens are introduced into the rotary drum is situated on the front door side and an outlet port through which dried linens are removed therefrom is situated on the rear door side. However, with this construction, the whole apparatus tends to be designed in larger dimensions.

As is apparent from the above description, operation for removing linens from the interior of the rotary drum is a hard task which is disliked by anybody. Accordingly, a request for improving such severe task of removing linens from the rotary drum has been raised from the laundry industry.

Now, with the foregoing background in mind, subjects to be solved will be summarized in the following.

To successively perform steps of washing, dewatering and drying, it is necessary that a period of time required for performing the respective steps is substantially shortened and linens can be easily removed away from the inner wall surface of a rotary drum after completion of the step of drying. Particularly, to shorten a period of time required for performing steps of washing, dewatering and drying, the following items should be improved.

### (1) Reduction of a time required for the step of washing:

It is advantageous from the viewpoint of an effect of washing that the number of revolution of rotary drum is increased as far as possible to increase the number of drops of linens so that an effect of agitation is increased substantially accompanied by an improved property of washing or a reduced washing time. However, since the number of revolutions of a rotary drum can not be set to a level in excess of 0.8 G for the aforementioned reasons, this offers a significant obstruction when a washing time is to be shortened.

### (2) Reduction of a time required for the step of dewatering:

A conventional dewatering unit is usually constructed that the inner wall surface of a rotary drum extends at right angles relative to the direction of centrifugal force (while a so-called corrugation angle exhibits 180°). This construction leads to a significant drawback that water involved in linens located in the proximity of the inner wall surface of the rotary drum is not satisfactorily removed therefrom and moreover a property of dewatering to be naturally derived from an intensity of centrifugal force is not exhibited to the satisfaction of an operator. Consequently, an extra amount of energy and time are consumed for the purpose of drying linens after completion of the step of dewatering.

### (3) Reduction of a time required for the step of drying:

Hot air is heretofore introduced into a rotary drum in accordance with the air suction manner. The hot air moves in the rotary drum in the form of a so-called laminar flow of which average flowing speed is determined in the range of 1 to 2 m/sec. Even when it is to flow at the highest speed, the flowing speed is set to a level less than 5 m/sec.

To assure that linens comes in contact with hot air at a high efficiency within the interior of the rotary drum, it is necessary that the number of revolutions of the rotary drum is determined in the range of 0.7 to 0.8 G in terms of a gravity acceleration and the linens are floated in the laminar flow of hot air as long as possible. If the number of revolutions of the rotary drum is set to a level of more or less 1 G or in excess of 1 G, the result is that the linens are brought in tight contact with the inner wall surface of the rotary drum and thereby drying is achieved only with much difficulties. In other words, an opportunity for allowing a mass of linens located at the lower part of the rotary drum to be floated in the hot air as the rotary drum is rotated is maximized when the umber of revolutions of the rotary drum is determined in the range of 0.7 to 0.8 G represented by a gravity acceleration. If the rotary drum is rotated at a rotational speed lower than the foregoing range, the result is that the above opportunity is adversely reduced.

Further, since an average speed of hot air remains at a a low level of 1/2 m/sec, a relative speed of the linens to the hot air can not be set to a high level. Strictly speaking, removing of water vapor evaporated from the linen layer is achieved with a delay corresponding to the reduced relative speed.

For the aforementioned reasons, an average drying time is set in the range of 30 to 40 minutes in accordance with the conventional suction manner. Accordingly, a request for developing a drier adapted to remarkably shorten the average drying time has been raised from the laundry industry.

### (4) Easy removal of linens from a rotary drum

As mentioned above, operation for removing linens from a rotary drum is a severe task which is disliked by anyone. Accordingly, a request for improving the removing operation has been also raised from the laundry industry.

Document US-A-3 358 301 discloses a drum type washing apparatus according to the pre-characterizing part of claim 1.

### OBJECTS AND SUMMARY OF THE INVENTION

The present invention has been made with the foregoing problems in mind and its principal object resides in providing a drum type washing apparatus which is entirely free from these problems.

Other object of the present invention is to provide a drum type washing apparatus which assures that a property of dewatering inherent to the apparatus of the present invention is satisfactorily exhibited and at the same time a quantity of energy and time consumed during a step of dewatering can be reduced substantially.

Another object of the present invention is to provide a drum type washing apparatus which assures that the aforementioned restriction relative to the number of revolutions of the rotary drum can be eliminated.

Further another object of the present invention is to provide a drum type washing apparatus which assures that linens which have been brought in tight contact with the inner wall surface of the rotary drum can be mechanically removed therefrom at a high efficiency without an occurrence of closure of communication holes as well as without reduction of a dewatering rate.

Further another object of the present invention is to provide a drum type washing apparatus which assures that two significant problems are satisfactorily solved, one of them being such that a conventional apparatus has a restriction relative to the range within which the number of revolutions of the rotary drum is determined so as to allow linens to be floated in a laminar flow of hot air and the other one being such that an average speed of flowing of the linens in the atmosphere of hot air is set to a low level of 1 to 2 m/sec and thereby a relative speed of the hot air to the linens can not be determined at a high level.

Further another object of the present invention is to provide a drum type washing apparatus which offers advantageous effects that linens in a rotary drum can be uniformly dries even when the rotary drum is charged with an excessive amount of load more than a standard quantity of load and a period of time required for performing a step of drying can be shortened substantially.

The present invention provides a drum type washing apparatus including a rotary drum of which peripheral wall is formed with a number of communication holes and which is equipped with a plurality of beaters projecting inwardly of the inner wall surface of the rotary drum which is rotatably supported in an outer drum, wherein the apparatus is provided with a gas blowing nozzle adapted to blow gas toward the outer wall surface of the rotary drum so that gas is blown toward the rotary drum just before a step of dewatering is terminated or immediately after it is terminated.

### BRIEF DESCRIPTION OF THE DRAWINGS

The present invention will be illustrated in the following drawings in which:

Fig. 1(A) is a sectional side view of a conventional drum type drier.

Fig. 1(B) is a cross-sectional view of the drier in Fig. 1(A).

Fig. 2 is a schematic cross-sectional view of the drier similar to Fig. 1(B), particularly illustrating how the linen layer comes in contact with the inner wall surface of the rotary drum during a period of testing with respect to a period of dewatering.

Fig. 3 is a graph illustrating distribution of a water content during the period of testing as shown in Fig. 2

Fig. 4 is a cross-sectional view schematically illustrating conventional drum type washing apparatus.

Fig. 5 is a sectional side view illustrating another conventional drum type washing apparatus.

Fig. 6 is a cross-sectional view of the apparatus taken in line C - C in Fig. 5.

Figs. 7 and 8 are a sectional side view schematically illustrating essential components constituting another drum type washing apparatus, respectively.

Fig. 9 is a sectional side view of the apparatus taken in A - A in Fig. 8.

Fig. 10 is a sectional side view of another conventional drum type washing apparatus, and

Fig. 11 is a front view of the apparatus in Fig. 40.

Fig. 12 to 15 illustrate a drum type washing apparatus in accordance with a fourth embodiment of the present invention, respectively.

Fig. 12 is a sectional side view of the apparatus in accordance with this embodiment.

Fig. 13 is a cross-sectional view of the apparatus taken in line A - A in Fig. 12.

Fig. 14 is a sectional side view of a drum type washing apparatus in accordance with a modified embodiment from the embodiment shown in Fig. 13.

Fig. 15 is a cross-sectional view of the apparatus taken in line B - B in Fig. 14.

### DETAILED DESCRIPTION OF THE PREFERRED EMBODIMENTS

Now, the present invention will be described in a greater detail hereinafter with reference to the accompanying drawings which illustrate preferred embodiment thereof.

### (Fourth Embodiment)

Fig. 12 is a schematic sectional side view illustrating a washing apparatus in accordance with a fourth embodiment of the present invention and Fig. 13 is a cross-sectional view of the apparatus taken in line A - A in Fig. 12.

A rotary drum 402 having a number of holes 401 formed thereon is equipped with a plurality of beaters 404 round the inner wall surface thereof, and it is rotatably supported in an outer drum 403 via bearings 405 adapted to bear a main shaft 405. The outer drum 403 is provided with an air blowing nozzle 410 of which orifice is oriented toward the outer surface of the rotary drum 402. The air blowing nozzle 410 is communicated via an air valve 412 with an air tank 411 installed outside the apparatus so that compressed air in the air tank 411 is blown through the nozzle 410 by opening the air valve 412 and then introduced into the interior of the rotary drum 402 through a number of communication holes 401.

In the illustrated embodiment, the air blowing nozzle 410 is attached to the outer drum 403 at a position located above the outer surface of the latter. Alternatively, it may be attached to the outer drum 403 on the side wall of the latter. In addition, it is essential that a distance between the outer peripheral surface of the rotary drum 402 and the air blowing nozzle 410 is dimensioned as short as possible. The shorter the distance, the smaller the amount of air leaked to the surrounding area. Consequently, air blowing is more effectively performed with the above distance which is determined possibly short.

While the air blowing nozzle 410 is not in use during a step of washing or the like, compressed air is accumulated in the air tank 411 so that it is blown through the air blowing nozzle 410 on or after completion of the dewatering by opening the air valve 412. Incidentally, in the illustrated embodiment a single air tank 411 is installed outside the apparatus. Alternatively, a plurality of air tanks 411 may be installed. The air valve 412 is not necessarily opened one time. It may be opened via plural stages.

The outer drum 403 is provided with an exhaust duct 415 for the purpose of preventing a pressure in the outer drum 403 from being excessively increased at the time when compressed air is blown toward the rotary drum 402. The exhaust duct 415 is not necessarily constructed in a special structure. It may be a simple hole which is opened to the atmosphere.

Next, operations of the apparatus as constructed in the above-described manner after completion of the dewatering will be described below in more details.
(1) Linens are brought in tight contact with the whole inner wall surface of the rotary drum 402, because they are liable to be penetrated into the holes 401 during a period of dewatering.
(2) Compressed air is accumulated in the air tank 411 until air blowing is initiated.
(3) On or after completion of dewatering, the air valve 412 is opened after it is confirmed that the number of revolutions of the rotary drum 402 is reduced to such a level that an acceleration appearing round the outer wall surface of the rotary drum 402 is reduced less than 1 G.
(4) Compressed air in the air tank passes past the air valve 412 so that it is blown toward the outer wall surface of the rotary drum 402 through the air nozzle 412 on the outer drum 403. This causes the linens 408 to be displaced inwardly from the inner wall surface of the rotary drum 402 under the effect of compressed air flowing through the communication holes 401 whereby a gap appears between the linens 408 and the inner wall surface of the rotary drum 402. Thus, the layered structure of the linens 408 is destroyed under the influence of its own dead weight.
(5) The layered structure of the linens 408 can be more easily destroyed at the time as represented in the preceding paragraph (4) by repeating rotation and subsequent interruption of rotation of the rotary drum 402 in both normal and reverse directions.
(6) Air blowing may be performed via plural stages with a plurality of air tanks 411 installed outside the apparatus. Further, air blowing may be performed while the air valve 412 is intermittently opened and closed. With the above performance, more effective air blowing is assured.
(7) As the rotary drum 402 is continuously rotated in both normal and reverse direction while a part of the layered structure of the linens 408 is destroyed, the linens 408 which have been brought in tight contact with the whole inner surface of the rotary drum 402 are parted away therefrom within a short period of time so that the layered structure of the linens 408 is destroyed under the effect of its own dead weight.
(8) After compressed air is blown in that way, it is discharged from the outer drum 403 to the outside via the exhaust duct 415 so that excessive increase of pressure in the outer drum 403 is prevented.

Fig. 14 is a schematic sectional side view illustrating a washing apparatus in accordance with a modified embodiment of the present invention and Fig. 15 is a cross-sectional of the apparatus taken in line B - B in Fig. 14.

In this embodiment, air pressure is continuously generated by rotating a blower 413 instead of compressed air accumulated in the air tank 411. In detail, the apparatus is provided with a blower 410 for blowing toward the rotary drum 402 the environmental air which has been introduced from the outside and compressed by the blower 413. A damper 414 is disposed in the air passage for opening or closing the air duct so that it is opened only at the time when air blowing is performed.

It should be noted that a flow rate of the air conveyed by the blower 413 should be determined more than 0.53 m³/min per unit weight (Kg) of the linens.

Next, operations of the apparatus after completion of a step of dewatering will be described below.
(1) The air damper 414 is opened on or after completion of the dewatering after it is confirmed that the number of revolutions of the rotary drum 401 is reduced to such a level that an acceleration appearing round the outer wall surface of the rotary drum 402 is reduced less than 1 G.
(2) The air conveyed by the blower 413 passes past the air damper 414 and it is then blown toward the outer wall surface of the rotary drum 402 through the air nozzle 410 so that it flows through the communication holes 401 to displace the linens 408 in the inward direction. This causes a gap to be produced between the linens 408 and the inner wall surface of the rotary drum 402, resulting in the layered structure of the linens 408 being destroyed under the influence of its own dead weight.
(3) The layered structure of the linens 408 can he more easily destroyed at the time as represented in the preceding paragraph (2) by repeating rotation and subsequent interruption of rotation of the rotary drum 402 in both normal and reverse directions.
(4) Air blowing may be effectively performed by intermittently opening or opening or closing the air damper 414.
(5) As the rotary drum 402 is continuously rotated in both normal and reverse directions while a part of the layered structure of the linens 408 is destroyed, the linens 408 which have been brought in tight contact with the whole inner wall of the rotary drum 402 are parted away therefrom within a short period of time so that the layered structure of the linens 408 is destroyed under the influence of its own dead weight.
(6) The air blown in that way is discharged from the outer drum 403 to the outside via the exhaust duct 415 so that excessive increase of pressure in the outer drum 403 is prevented.

Incidentally, gas to be blown toward the outer wall surface of the rotary drum 407 should not be limited only to air. Other gas may be used, provided that it is proven that it is suitable for the same purpose.

## Claims

1. A drum type washing apparatus including a housing, a rotary drum (402) made of a perforated plate to perform at least one step among steps of washing, dewatering and drying the wash in said rotary drum, said apparatus is provided with a plurality of beaters (404) which are attached to the inner wall surface of the rotary drum (402), rotatably supported within an outer drum (403)
characterized by
an air blowing nozzle (410) arranged at said outer drum (403) so as to open toward an outer wall surface of said rotary drum;
an exhaust hole (415) provided in said outer drum (403);
air blowing means including a duct with an integral blower (413) for conducting air to an integral air valve for adjusting the blown air flow rate, said air valve being connected to said air blowing nozzle for blowing air toward said rotary drum, said blower and air valve being arranged within the apparatus housing; and mean (414) for actuating the air blowing means when the number of revolutions of said rotary drum is lowered to a level where less than 1 G of acceleration is present at the periphery of said rotary drum after the dewatering step so that washed linens closely adhering to the inner wall surface of said rotary drum are removed.

2. A drum type washing apparatus according to claim 1
characterized in that the blown air flow rate is adjusted to more than 0.53 m³/min. Kg of linens.

## Patentansprüche

1. Trommelwaschmaschine, die ein Gehäuse und eine Drehtrommel (402) aus gelochtem Blech besitzt und von den Schritten Waschen, Schleudem und Trocknen der Wäsche mindestens einen Schritt in der Drehtrommel ausführt, wobei die Maschine an der Innenwand der Drehtrommel (402) mit einer Anzahl von Mitnehmerrippen (404) ausgestattet und die Drehtrommel in einer äußeren Trommel (403) drehbar gelagert ist,
dadurch gekennzeichnet, daß
an der äußeren Trommel (403) eine Luftdüse (410) so angeordnet ist, daß ihre Öffnung auf die Außenwandfläche der Drehtrommel gerichtet ist;
die äußere Trommel (403) mit einer Auslaßöffnung (415) versehen ist;
eine Luftblaseinrichtung vorgesehen ist, die aus einem Kanal mit einem eingebauten Gebläse (413) besteht, mit dessen Hilfe Luft zu einem eingebauten Luftventil, das die Strömungsgeschwindigkeit der eingeblasenen Luft regelt, geführt wird, wobei das Luftventil mit der Luftdüse verbunden ist, um die Luft in Richtung der Drehtrommel zu blasen, und sich das Gebläse und das Luftventil im Gehäuse der Maschine befinden; und daß eine Vorrichtung (414) vorhanden ist, die die Luftblaseinrichtungen betätigt, wenn sich die Drehzahl der Drehtrommel auf eine Beschleunigung von weniger als 1 G an der Peripherie der Drehtrommel nach dem Schleudervorgang verringert, so daß sich die fest an der Innenwand der Drehtrommel anliegende Wäsche löst.

2. Trommelwaschmaschine nach Anspruch 1,
dadurch gekennzeichnet, daß die Strömungsgeschwindigkeit der eingeblasenen Luft auf einen Wert über 0,53 m³ / min pro kg Wäsche eingestellt wird.

## Revendications

1. Appareil de lavage du type à tambour, incluant un carter, un tambour rotatif (402) fabriqué en une plaque perforée pour réaliser au moins une étape parmi les étapes de lavage, d'essorage et de séchage, du linge dans ledit tambour rotatif, ledit appareil est muni d'une pluralité de batteurs (404) qui sont fixés à la surface de paroi interne du tambour rotatif (402) supporté, de façon rotative, à l'intérieur d'un tambour externe (403),
caractérisé par :
- une buse de soufflage d'air (410), agencée sur ledit tambour externe (403) de façon à s'ouvrir vers une surface de paroi externe dudit tambour rotatif ;
- un trou d'échappement (415) prévu dans ledit tambour externe (403) ;
- des moyens de soufflage d'air incluant un conduit ayant un ventilateur intégré (413) pour diriger l'air vers une valve à air intégrée pour régler le débit d'air soufflé, ladite valve à air étant reliée à ladite buse de soufflage d'air pour souffler l'air vers ledit tambour rotatif, ledit ventilateur et ladite valve à air étant agencés dans le carter de l'appareil ; et
- des moyens (414) pour actionner les moyens de soufflage d'air quand le nombre de tours dudit tambour rotatif diminue à un niveau où moins de 1 G d'accélération est présent à la périphérie dudit tambour rotatif après l'étape d'essorage, de sorte que le linge lavé, adhérant étroitement à la surface de paroi interne dudit tambour rotatif, est retiré.

2. Appareil de lavage du type à tambour selon la revendication 1,
caractérisé en ce que le débit d'air soufflé est réglé à plus de 0,53 m³/mn par kg de linge.
